# FASCICULE DE BREVET EUROPEEN

(11) **EP 2 316 632 B1**
(45) Date de publication et mention de la délivrance du brevet: **05.06.2013**
(21) Numéro de dépôt: 10354069.6
(22) Date de dépôt: 27.10.2010
(51) Int. Cl.: B29C 45/14

(54) **Insert taraudé à surmouler et procédé de surmoulage**
Umspritzter Gewindeeinsatz und Verfahren zu seiner Herstellung
A surmoulded threaded insert and process for making the same

(30) Priorité: 29.10.2009 FR 0905202
(43) Date de publication de la demande: 04.05.2011
(73) Titulaire: Bollhoff Otalu S.A., 73490 La Ravoire (FR)
(72) Inventeur: Billion Laroute, David, 38380 Saint Laurent du Pont (FR); Begel, Nicolas, 73000 Chambéry (FR); Palluel, Frédéric, 73000 Chambéry (FR)
(74) Mandataire: Gris, Sébastien

(56) Documents cités:
- EP-A1- 2 168 750
- EP-A2- 1 136 231
- WO-A1-2006/050716
- DE-A1- 10 160 185
- DE-U- 7 440 446
- JP-A- 5 269 791
- JP-A- 6 048 447
- JP-A- 8 156 013
- JP-A- 2004 042 561
- JP-A- 2006 322 500
- JP-A- 2008 073 885
- US-A- 4 443 173
- US-A- 4 774 749

## Description

### Domaine technique de l'invention

L'invention est relative à un insert taraudé à surmouler, comprenant un fût muni à ses extrémités axiales de collerettes délimitant deux têtes de l'insert axialement opposées, ledit fût étant doté d'un tronçon axial fileté intérieurement pour constituer un taraudage, des moyens pour bloquer en rotation l'insert après surmoulage et des moyens pour bloquer axialement en translation l'insert après surmoulage étant aménagés à l'extérieur du fût.

L'invention concerne également un procédé de surmoulage d'un insert taraudé à surmouler comprenant un fût muni à ses extrémités axiales de collerettes délimitant deux têtes de l'insert axialement opposées, ledit fût étant doté d'un tronçon axial fileté intérieurement pour constituer un taraudage, et extérieurement d'une part de moyens pour bloquer en rotation l'insert après surmoulage et d'autre part de moyens pour bloquer axialement en translation l'insert après surmoulage.

### État de la technique

Il existe plusieurs types de fixations taraudées à insérer dans les pièces surmoulées : les fixations à insérer après le moulage de la pièce, ou les fixations à insérer avant le moulage. L'invention concerne le domaine du deuxième type mentionné, consistant donc au domaine du surmoulage d'un insert taraudé.

Classiquement, un tel insert taraudé comporte un taraudage sur toute sa hauteur et est obtenu par décolletage, de sorte que les moyens pour bloquer en rotation l'insert après surmoulage peuvent consister en un moletage croisé formé sur la face extérieure du fût. D'autre part des gorges de section carrée peuvent être formées au raccordement entre chacune des têtes et la face extérieure du reste du fût.

Une technique de surmoulage consiste à mettre en appui l'insert décrit ci-dessus par l'une de ses têtes sur une première partie d'un moule de surmoulage, puis une deuxième partie du moule est rabattue jusqu'à fermeture du moule. La hauteur entre les deux parties du moule après fermeture est constante pour un moule donné, mais variable d'un moule à l'autre. De même, la longueur axiale entre têtes des inserts utilisés est variable selon la fabrication, généralement dans une tolérance donnée.

Il résulte de ces deux paramètres variables que l'insert est soit trop court axialement en comparaison de la hauteur entre les deux parties du moule après fermeture, soit trop longue. Dans le premier cas, la qualité du surmoulage est médiocre à cause d'un engagement fortuit de matière entre l'une des têtes de l'insert et la partie de moule correspondante. Dans le deuxième cas, la fermeture du moule s'accompagne d'une détérioration irréversible du taraudage de l'insert, conduisant à une qualité médiocre de la pièce surmoulée.

Le document JP08156013 décrit un insert à surmouler muni de deux têtes et d'un alésage intérieur comportant un filetage. L'insert comporte sur sa face extérieure une gorge concentrique au filetage.

### Objet de l'invention

L'objet de l'invention consiste à réaliser un insert permettant de pallier conjointement le risque d'un engagement fortuit de matière entre l'une des têtes de l'insert et la partie de moule correspondante, et le risque de détérioration du taraudage de l'insert.

L'insert selon l'invention est remarquable en ce que le fût comporte au moins une zone fusible de plus grande déformabilité axiale intercalée entre ledit tronçon axial fileté et l'une des têtes, configurée pour se déformer sous un effort axial prédéterminé de compression appliqué aux têtes sans provoquer de déformation dudit tronçon axial fileté.

Une telle zone fusible a pour effet de permettre un raccourcissement de la longueur axiale de l'insert sous l'effet d'une charge axiale prédéterminée, par exemple en cas de fermeture d'un moule de surmoulage, sans engendrer de déformation et de détérioration du taraudage.

Le procédé de surmoulage selon l'invention est quant à lui remarquable en ce qu'il consiste à :
- mettre en appui l'une des têtes de l'insert sur une première partie d'un moule de surmoulage,
- mettre en appui une deuxième partie du moule sur l'autre tête de l'insert,
- rapprocher les deux parties de moule en appliquant un effort axial de compression aux têtes de l'insert, pour déformer au moins une zone fusible de plus grande déformabilité axiale intercalée entre ledit tronçon axial fileté et l'une des têtes, sans provoquer de déformation dudit tronçon axial fileté, jusqu'à la fermeture du moule,
- injecter à l'intérieur du moule une matière de surmoulage autour de l'insert.

### Description sommaire des dessins

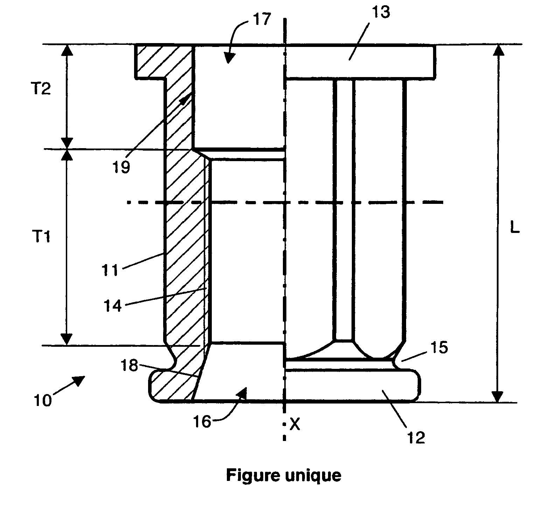

D'autres avantages et caractéristiques ressortiront plus clairement de la description qui va suivre d'un mode particulier de réalisation de l'invention donné à titre d'exemple non limitatif et représenté sur la figure unique annexée représentant un exemple d'insert taraudé selon l'invention, en semi coupe longitudinale.

### Description d'un mode préférentiel de l'invention

La figure unique annexée représente un exemple d'insert taraudé 10 à surmouler selon l'invention. La partie droite représente l'insert de l'extérieur, tandis que la partie gauche est une coupe axiale.

L'insert 10 comprend un fût 11 en forme de tube dirigé selon un axe de révolution matérialisant la direction axiale X de l'insert. Le fût 11 est muni à ses extrémités axiales de collerettes transversales dirigées vers l'extérieur, délimitant ainsi deux têtes 12, 13 de l'insert axialement opposées. La longueur axiale de l'insert est repérée L.

Entre les têtes 12, 13, le fût 11 est doté d'un tronçon axial fileté T1 intérieurement pour constituer un taraudage 14 sur au moins une partie de la longueur axiale L de l'insert. Un tel taraudage 14 est destiné à coopérer avec un organe de vissage (non représenté) du type vis ou boulon après surmoulage.

Le fût 11 porte des moyens pour bloquer en rotation l'insert 10 après surmoulage et des moyens pour bloquer axialement en translation l'insert après surmoulage. Ces deux types de moyens complémentaires par leurs fonctions mécaniques sont aménagés à l'extérieur du fût. Les moyens anti-rotation sont par exemple obtenus par le fait que sur au moins une partie de sa longueur axiale L, la surface extérieure du fût 11 est un cylindre dont une courbe directrice présente une forme polygonale. Par définition, un cylindre est une surface de l'espace définie par une droite appelée génératrice, passant par un point variable décrivant une courbe plane fermée, appelée courbe directrice, et conservant une direction fixe.

Au raccordement entre l'une 12 des têtes 12, 13 de l'insert 10 à la surface extérieure du reste du fût 11 est formée une gorge annulaire 15 pratiquée extérieurement dans le fût dans un plan perpendiculaire à son axe X. À titre d'exemple, la section de la gorge est globalement en V avec un fond arrondi. Dans ce cas, il est possible de prévoir que l'un des flancs de la gorge soit parfaitement transversal, c'est-à-dire perpendiculaire à la direction X, mais que l'autre flanc de la gorge 15 soit incliné en direction de l'autre tête. Une telle gorge a pour première fonction de constituer les moyens pour bloquer axialement en translation l'insert après surmoulage.

Dans l'exemple illustré, la hauteur complète de la surface extérieure du fût séparant les têtes 12, 13 est un cylindre dont une courbe directrice présente une forme polygonale, par exemple hexagonale, à l'exception de la zone où est formée la gorge 15.

De manière non limitative, l'insert 10 est par exemple débouchant, c'est-à-dire que le conduit intérieur débouche à ses deux extrémités au travers des deux têtes 12, 13 au niveau de deux ouvertures 16, 17. La partie de ce conduit raccordant le taraudage 14 à l'ouverture 16 débouchant dans la tête 12 peut être constituée par un cône 18 évasé en direction de la tête 12 correspondante.

Un alésage 19 est aménagé sur le tronçon axial T2 du fût 11 distinct du tronçon axial fileté T1 et raccordant la tête 13 opposée à la tête 12 du côté de la gorge 15. L'alésage 19 présente un diamètre intérieur supérieur au diamètre du taraudage 14. Cet alésage 19 a pour effet de constituer une réduction de l'épaisseur du fût 11, le long du tronçon axial T2, par rapport à celle le long du tronçon axial fileté T1.

Selon l'invention, le fût 11 comporte au moins une zone fusible de plus grande déformabilité axiale intercalée entre le tronçon axial fileté T1 et l'une des têtes 12, 13. La zone fusible est configurée pour se déformer sous un effort axial prédéterminé de compression appliqué aux têtes 12, 13 sans provoquer de déformation du tronçon axial fileté T1, et donc du taraudage 14.

Une première zone fusible est constituée par l'aménagement de l'alésage 19. Une deuxième zone fusible peut être formée par la gorge annulaire 15, dont l'action peut être renforcée du côté intérieur par l'agencement du cône 18.

Aux extrémités distales du tronçon axial fileté T1 (extrémités orientées selon l'axe du tronçon T1), le filetage peut être, comme sur l'exemple de la figure unique, interrompu de sorte à permettre la formation de ladite au moins une zone fusible, de préférence directement, à la suite dudit tronçon axial fileté T1. Autrement dit, la zone fusible, intérieurement au fût, ne comporte pas de filetage. Ainsi, après déformation de la zone fusible, il sera toujours possible de visser un élément correspondant dans l'insert. L'insert peut, au contraire du filetage, comporter un alésage 19 tel que décrit ci-dessus permettant de visser facilement l'élément dont le pas de vis correspond au taraudage du tronçon axial fileté T1, même après déformation de la zone fusible, cet alésage évitant par exemple la formation d'un bourrelet intérieurement au fût empêchant le passage et le vissage de l'élément.

Dans une technique avantageuse de fabrication, l'insert 10 peut être réalisé par frappe à froid. D'autre part l'invention peut indifféremment s'appliquer à un insert de type borgne, c'est-à-dire dont le conduit intérieur délimité par le fût ne débouche que sur l'une des têtes au niveau d'une seule ouverture.

Une technique de surmoulage de l'insert taraudé 10 consiste à mettre en appui l'insert 10 décrit ci-dessus par l'une de ses têtes 12, 13 sur une première partie d'un moule de surmoulage, puis une deuxième partie du moule est rabattue jusqu'à fermeture du moule. Une technique avantageuse consiste à prévoir que la hauteur entre les deux parties du moule après fermeture soit légèrement inférieure à la longueur axiale L attendue, la différence entre la longueur axiale L de l'insert 10 et la hauteur entre les deux parties de moule étant inférieure à la capacité de déformation axiale de la zone fusible équipant l'insert.

Il en résulte que lorsque la deuxième partie de moule est rabattue, elle vient dans un premier temps en contact avec la tête 13 de l'insert sans atteindre la fermeture du moule. Puis un effort mécanique est appliqué à la deuxième partie de moule pour continuer son mouvement jusqu'à la fermeture, s'accompagnant de la transmission à l'insert d'un effort axial de compression appliqué aux têtes 12, 13 de valeur supérieure à l'effort axial prédéterminé de compression au-delà duquel la zone fusible de l'insert est prévue pour se déformer. Enfin la matière de surmoulage peut être injectée dans le moule de surmoulage.

En d'autres termes, un procédé de surmoulage de l'insert taraudé 10 à surmouler décrit précédemment consiste à :
- mettre en appui l'une 12 des têtes 12, 13 de l'insert 10 sur une première partie d'un moule de surmoulage,
- mettre en appui une deuxième partie du moule sur l'autre tête 13 de l'insert 10,
- rapprocher les deux parties de moule en appliquant un effort axial de compression aux têtes 12, 13 de l'insert 10, pour déformer au moins une zone fusible de plus grande déformabilité axiale intercalée entre le tronçon axial fileté T1 et l'une des têtes 12, 13, sans provoquer de déformation de ce tronçon axial fileté T1, jusqu'à la fermeture du moule,
- injecter à l'intérieur du moule une matière de surmoulage autour de l'insert.

## Revendications

1. Insert taraudé (10) à surmouler, comprenant un fût (11) muni à ses extrémités axiales de collerettes délimitant deux têtes (12, 13) de l'insert (10) axialement opposées, ledit fût (11) étant doté d'un tronçon axial fileté (T1) intérieurement pour constituer un taraudage (14), des moyens pour bloquer en rotation l'insert (10) après surmoulage et des moyens pour bloquer axialement en translation l'insert (10) après surmoulage étant aménagés à l'extérieur du fût (11), **caractérisé en ce que** le fût (11) comporte au moins une zone fusible de plus grande déformabilité axiale intercalée entre ledit tronçon axial fileté (T1) et l'une des têtes (12, 13), configurée pour se déformer sous un effort axial prédéterminé de compression appliqué aux têtes sans provoquer de déformation dudit tronçon axial fileté (T1).

2. Insert selon la revendication 1, **caractérisé en ce que** la zone fusible est constituée par une gorge annulaire (15) pratiquée extérieurement dans le fût (11) dans un plan perpendiculaire à son axe (X).

3. Insert selon l'une des revendications 1 et 2, **caractérisé en ce que** la zone fusible est constituée par un alésage (19) aménagé sur un tronçon axial (T2) du fût (11) distinct du tronçon axial fileté (T1) et ayant un diamètre intérieur supérieur au diamètre du taraudage (14).

4. Insert selon l'une des revendications 1 à 3, **caractérisé en ce que** sur au moins une partie de sa longueur axiale (L), la surface extérieure du fût (11) est un cylindre dont une courbe directrice présente une forme polygonale.

5. Insert selon l'une des revendications 1 à 4, **caractérisé en ce qu'**il est réalisé par frappe à froid.

6. Insert selon l'une des revendications 1 à 5, **caractérisé en ce qu'**il est débouchant.

7. Insert selon l'une des revendications 1 à 5, **caractérisé en ce qu'**il est borgne.

8. Procédé de surmoulage d'un insert taraudé (10) à surmouler comprenant un fût (11) muni à ses extrémités axiales de collerettes délimitant deux têtes (12, 13) de l'insert (10) axialement opposées, ledit fût (11) étant doté d'un tronçon axial fileté (T1) intérieurement pour constituer un taraudage (14), et extérieurement d'une part de moyens pour bloquer en rotation l'insert (10) après surmoulage et d'autre part de moyens pour bloquer axialement en translation l'insert (10) après surmoulage, **caractérisé en ce qu'**il consiste à :
- mettre en appui l'une des têtes (12, 13) de l'insert (10) sur une première partie d'un moule de surmoulage,
- mettre en appui une deuxième partie du moule sur l'autre tête (12, 13) de l'insert (10),
- rapprocher les deux parties de moule en appliquant un effort axial de compression aux têtes (12, 13) de l'insert (10), pour déformer au moins une zone fusible de plus grande déformabilité axiale intercalée entre ledit tronçon axial fileté (T1) et l'une des têtes (12 13), sans provoquer de déformation dudit tronçon axial fileté (T1), jusqu'à la fermeture du moule,
- injecter à l'intérieur du moule une matière de surmoulage autour de l'insert (10).

## Patentansprüche

1. Zu umspritzender Gewindeeinsatz (10), umfassend einen Schaft (11), der an seinen axialen Enden mit Krägen versehen ist, die zwei axial gegenüberliegende Köpfe (12, 13) des Einsatzes (10) begrenzen, wobei der Schaft (11) innen mit einem axialen Gewindeabschnitt (T1), um ein Innengewinde (14) zu bilden, versehen ist, wobei Mittel, um den Einsatz (10) nach dem Umspritzen gegen ein Drehen festzulegen, sowie Mittel, um den Einsatz (10) nach dem Umspritzen axial gegen ein Verschieben festzulegen, außerhalb des Schaftes (11) angeordnet sind, **dadurch gekennzeichnet, dass** der Schaft (11) wenigstens einen Schmelzbereich mit größerer axialer Verformbarkeit, welcher zwischen dem axialen Gewindeabschnitt (T1) und einem der Köpfe (12, 13) eingefügt ist, umfasst, der ausgebildet ist, um sich unter einer an die Köpfe angelegten vorbestimmten axialen Druckkraft zu verformen, ohne ein Verformen des axialen Gewindeabschnitts (T1) zu bewirken.

2. Einsatz nach Anspruch 1, **dadurch gekennzeichnet, dass** der Schmelzbereich durch eine Ringnut (15) gebildet ist, welche außen in dem Schaft (11) in einer zu seiner Achse (X) senkrechten Ebene ausgebildet ist.

3. Einsatz nach einem der Ansprüche 1 und 2, **dadurch gekennzeichnet, dass** der Schmelzbereich durch eine Bohrung (19) gebildet ist, die über einen von dem axialen Gewindeabschnitt (T1) unterschiedlichen axialen Abschnitt (T2) des Schaftes (11) ausgebildet ist und einen Innendurchmesser aufweist, der größer als der Durchmesser des Innengewindes (14) ist.

4. Einsatz nach einem der Ansprüche 1 bis 3, **dadurch gekennzeichnet, dass** über wenigstens einen Teil seiner axialen Länge (L) die Außenfläche des Schaftes (11) ein Zylinder ist, von dem eine Leitkurve eine polygonale Form aufweist.

5. Einsatz nach einem der Ansprüche 1 bis 4, **dadurch gekennzeichnet, dass** er durch Kaltschlag hergestellt ist.

6. Einsatz nach einem der Ansprüche 1 bis 5, dadurch gekenntzeichnet, dass er durchgehend ist.

7. Einsatz nach einem der Ansprüche 1 bis 5, **dadurch gekennzeichnet, dass** er blind ist.

8. Verfahren zum Umspritzen eines zu umspritzenden Gewindeeinsatzes (10), umfassend einen Schart (11), der an seinen axialen Enden mit Krägen versehen ist, die zwei axial gegenüberliegende Köpfe (12, 13) des Einsatzes (10) begrenzen, wobei der Schaft (11) innen mit einem axialen Gewindeabschnitt (T1), um ein Innengewinde (14) zu bilden, sowie außen einerseits mit Mitteln, um den Einsatz (10) nach dem Umspritzen gegen ein Drehen festzulegen, und andererseits mit Mitteln, um den Einsatz (10) nach dem Umspritzen axial gegen ein Verschieben festzulegen, versehen ist, **dadurch gekennzeichnet, dass** es darin besteht:
- den einen der Köpfe (12, 13) des Einsatzes (10) an einem ersten Teil einer Umspritzform in Anlage zu bringen,
- einen zweiten Teil der Form an dem anderen Kopf (12, 13) des Einsatzes (10) in Anlage zu bringen,
- die beiden Formenteile durch Anlegen einer axialen Druckkraft an die Köpfe (12, 13) des Einsatzes (10) zu nähern, um wenigstens einen Schmelzbereich mit größerer axialer Verformbarkeit, welcher zwischen dem axialen Gewindeabschnitt (T1) und einem der Köpfe (12, 13) eingefügt ist, ohne Bewirken einer Verformung des axialen Gewindeabschnitts (T1) bis zum Schießen der Form zu verformen,
- in das Innere der Form ein Umspritzmaterial um den Einsatz (10) herum einzuspritzen.

## Claims

1. A treaded insert (10) to be insert moulded, comprising a shank (11) provided at its axial ends with flanges delineating two axially opposite heads (12, 13) of the insert (10), said shank (11) being provided with an internally threaded axial section (I1) to form a tapping (14), means for blocking the insert (10) in rotation after insert moulding and means for blocking the insert (10) axially in translation after insert moulding being arranged on the outside of the shank (11), **characterized in that** the shank (11) comprises at least one fusible area of greater axial deformability located between said threaded axial section (T1) and one of the heads (12, 13), configured to deform under a predefined axial compressive force applied to the heads without causing any deformation of said threaded axial section (T1).

2. The insert according to claim 1, **characterized in that** the fusible area is formed by an annular groove (15) made externally in the shank (11) in a plane perpendicular to its axis (X).

3. The insert according to one of claims 1 and 2, **characterized in that** the fusible area is formed by a bore (19) arranged on an axial section (T2) of the shank (11) distinct from the threaded axial section (T1) and having a larger internal diameter than the diameter of the tapping (14).

4. The insert according to one of claims 1 to 3, **characterized in that** over at least a part of its axial length (L), the outer surface of the shank (11) is a cylinder a directing curve whereof presents a polygonal shape.

5. The insert according to one of claims 1 to 4, **characterized in that** it is produced by cold heading.

6. The insert according to one of claims 1 to 5, **characterized in that** it is pass-through.

7. The insert according to one of claims 1 to 5, **characterized in that** it is blind.

8. A method for insert moulding a treaded insert (10) to be insert moulded comprising a shank (11) provided at its axial ends with flanges delineating two axially opposite heads (12, 13) of the insert (10), said shank (11) being provided with an internally threaded axial section (T1) to form a tapping (14), and externally on the one hand with means for blocking the insert (10) in rotation after insert moulding and on the other hand with means for blocking the insert (10) axially in translation after insert moulding, **characterized in that** it consists in:
- bringing one of the heads (12, 13) of the insert (10) to press on a first part of an insert moulding mould,
- bringing a second part of the mould to press on the other head (12, 13) of the insert (10),
- bringing nearer the two parts of mould by applying an axial compressive force on the heads (12, 13) of the insert (10) to deform at least one fusible area of greater axial deformability located between said threaded axial section (T1) and one of the heads (12, 13), without causing any deformation of said threaded axial section (T1), until closing of the mould is achieved,
- injecting an insert moulding material into the mould around the insert (10).
